# EUROPÄISCHE PATENTSCHRIFT

(11) **EP 4 188 173 B1**
(45) Veröffentlichungstag und Bekanntmachung des Hinweises auf die Patenterteilung: **21.08.2024**
(21) Anmeldenummer: 21742745.9
(22) Anmeldetag: 30.06.2021
(51) Int. Cl.: A47J 45/06, A47J 45/08

(54) **GARGESCHIRR MIT EINER AUSGABEEINHEIT UND VERFAHREN ZUM BETRIEB DES GARGESCHIRRS**
ITEM OF COOKWARE WITH AN OUTPUT UNIT, AND METHOD FOR OPERATING THE ITEM OF COOKWARE
USTENSILE DE CUISINE DOTÉ D'UNE UNITÉ DE SORTIE ET PROCÉDÉ DE FONCTIONNEMENT DE L'USTENSILE DE CUISINE

(30) Priorität: 29.07.2020 DE 102020119938
(43) Veröffentlichungstag der Anmeldung: 07.06.2023
(73) Patentinhaber: Miele & Cie. KG, 33332 Gütersloh (DE)
(72) Erfinder: MÜLLER, Christoph, 32289 Rödinghausen (DE); HÖLSCHER, Britta, 30167 Hannover (DE)
(86) Internationale Anmeldenummer: PCT/EP2021/067976
(87) Internationale Veröffentlichungsnummer: WO 2022/022932

(56) Entgegenhaltungen:
- CN-A- 108 378 678
- DE-U1- 202004 009 968
- US-A1- 2018 338 644

## Beschreibung

Die Erfindung betrifft ein Gargeschirr mit einer Ausgabeeinheit zur optischen Ausgabe von Informationen an einen Benutzer des Gargeschirrs nach dem Oberbegriff des Patentanspruchs 1 und ein Verfahren zum Betrieb eines Gargeschirrs.

Derartige Gargeschirre und Verfahren zu deren Betrieb sind aus dem Stand der Technik bereits vorbekannt. Die bekannten Gargeschirre umfassen dabei einen Garbehälter zur Aufnahme eines Garguts, optional einen Deckel zum Verschließen des Garbehälters, mindestens einen Griff zur Handhabung des Gargeschirrs, wobei ein Griffkörper des Griffs mittels eines Griffanschlussteils des Griffs mit dem Garbehälter undloder mit dem Deckel kraftübertragend verbunden ist, und wobei zwischen dem Griffanschlussteil und dem Garbehälter beziehungsweise dem Deckel ein Isolierteil des Gargeschirrs zur Reduzierung der Wärmeübertragung von dem Gargeschirr auf den Griffkörper angeordnet ist, und einer zumindest teilweise in dem Griffkörper integrierten Ausgabeeinheit zur optischen Ausgabe von Informationen an einen Benutzer des Gargeschirrs, wobei die Ausgabeeinheit mindestens eine Lichtquelle aufweist, und wobei die Lichtquelle mittels einer Steuerung des Gargeschirrs ansteuerbar und mittels einer Energiequelle des Gargeschirrs mit elektrischer Energie versorgbar ist.

CN 108378678 A beschreibt eine multifunktionale Pfanne. Der Griff dieser Pfanne ist mit einem Temperaturmessgerät und einer Anzeigelampe zur Erinnerung an Temperaturänderungen ausgestattet. Das Temperaturmessgerät umfasst einen am Boden des Pfannenkörpers angeordneten Temperaturfühler, eine zentrale Steuerplatine zur Aufnahme und Verarbeitung von Temperaturinformationen, einen auf der zentralen Steuerplatine angeordneten Timer sowie einen Bedienknopf zur Steuerung der Anzeigelampe und des Timer. Es ist eine dreiteilige Lampenbeleuchtung vorhanden, so dass der Betriebszustand der Pfanne leicht zu verstehen ist.

Der Erfindung stellt sich somit das Problem, ein Gargeschirr und ein Verfahren zum Betrieb eines Gargeschirrs zu verbessern.

Erfindungsgemäß wird dieses Problem durch ein Gargeschirr mit den Merkmalen des Patentanspruchs 1 gelöst, das dadurch gekennzeichnet ist, dass das Isolierteil als ein Lichtleiter mit mindestens einer Lichteinkoppelstelle zur Einkopplung von mittels der Lichtquelle emittierten Licht in das Isolierteil und mindestens einer Lichtauskoppelstelle zur Auskopplung dieses Lichts aus dem Isolierteil ausgebildet ist, wobei die Lichteinkoppelstelle an dem Griffkörper und die Lichtauskoppelstelle an einer von außen sichtbaren Oberfläche des Isolierteils angeordnet ist. Ferner wird dieses Problem durch ein Verfahren zum Betrieb eines Gargeschirrs mit den Merkmalen des Patentanspruchs 10 gelöst, wonach die mindestens eine Lichtquelle mittels der Steuerung in Abhängigkeit eines Betriebszustands des Gargeschirrs undloder eines Kochfelds, auf dem das Gargeschirr aufgestellt ist, undloder in Abhängigkeit einer Zuordnung undloder Nichtzuordnung des Gargeschirrs zu einer Kochstelle des Kochfelds undloder in Abhängigkeit eines Temperaturzustands des Gargeschirrs und/oder in Abhängigkeit eines Fehlerzustands des Gargeschirrs und/oder des Kochfelds angesteuert wird. Bei dem erfindungsgemäßen Gargeschirr kann es sich beispielsweise um einen Kochtopf, eine Pfanne, einen Bräter, einen Wasserkocher oder dergleichen handeln. Das erfindungsgemäße Gargeschirr kann dabei beispielsweise als für ein als Induktionskochfeld ausgebildetes Kochfeld geeignet ausgebildet sein. Das Griffanschlussteil kann dabei als ein mit dem Griffkörper verbundenes separates Teil oder als ein integraler Bestandteil des Griffkörpers ausgebildet sein. Die mindestens eine Lichtquelle kann beispielsweise als mindestens eine LED ausgebildet sein, wobei die mindestens eine Lichtquelle zur Abgabe von einfarbigem oder zur Abgabe von mehrfarbigem Licht geeignet ausgebildet sein kann. Die mindestens eine Lichtquelle kann mittels der Steuerung derart ansteuerbar sein und angesteuert werden, dass das von dieser Lichtquelle emittierte Licht für einen vorher festgelegten Zeitraum blinkt, pulsiert undloder dauerhaft leuchtet. Vorteilhafte Ausgestaltungen und Weiterbildungen der Erfindung ergeben sich aus den nachfolgenden Unteransprüchen.

Der mit der Erfindung erreichbare Vorteil besteht insbesondere darin, dass ein Gargeschirr und ein Verfahren zum Betrieb eines Gargeschirrs verbessert sind. Aufgrund der erfindungsgemäßen Ausbildung des Gargeschirrs und des Verfahrens zu dessen Betrieb ist beispielsweise eine intuitiv nachvollziehbare Ausgabe von Informationen zum Gargeschirr undloder zu einem Kochfeld, auf dem das Gargeschirr aufgestellt ist, an einen Benutzer des Gargeschirrs auf konstruktiv und schaltungstechnisch einfache Weise ermöglicht. Damit ist auch die Bedienung des Gargeschirrs insgesamt intuitiver gestaltet. Ferner ist die vorgenannte Ausgabe von Informationen an den Benutzer bauteilsparend, platzsparend und damit kostensparend realisiert. Insbesondere der Bauraumaspekt spielt bei Gargeschirren eine wesentliche Rolle, da der Bauraum bei Gargeschirren sehr beschränkt ist.

Grundsätzlich ist das Gargeschirr nach Art, Funktionsweise, Dimensionierung, Form und Material in weiten geeigneten Grenzen frei wählbar. Siehe hierzu auch die obigen Erläuterungen.

Eine vorteilhafte Weiterbildung des erfindungsgemäßen Gargeschirrs sieht vor, dass das Isolierteil transluzent ausgebildet ist. Auf diese Weise ist das Isolierteil für das von der Lichtquelle emittierte und durch das als Lichtleiter ausgebildete Isolierteil von dessen Lichteinkoppelstelle zu dessen Lichtauskoppelstelle transmittierte Licht durchsichtig, während für den Fall, dass die Lichtquelle kein Licht emittiert, das Isolierteil im Wesentlichen blickdicht ist. Entsprechend ist ein ungewünschter, weil unästhetischer Blick auf das Innere des Isolierteils und eventuell des Griffs dadurch wirksam verhindert. Grundsätzlich ist es jedoch auch möglich, das Isolierteil transparent auszubilden, also sowohl lichtdurchlässig als auch blickdurchlässig.

Eine andere vorteilhafte Weiterbildung des erfindungsgemäßen Gargeschirrs sieht vor, dass das Isolierteil als eine Dichtung, bevorzugt als eine Silikondichtung, ausgebildet ist. Hierdurch ist der Funktionsumfang des Isolierteils über die Isolierfunktion hinaus gesteigert. Ein ungewünschtes, weil unhygienisches und bedienerunfreundliches, Eindringen von Spülwasser oder anderen Flüssigkeiten in einen Zwischenraum zwischen dem Isolierteil auf der einen Seite und dem Garbehälter beziehungsweise dem Deckel oder dem Griffanschlussteil auf der anderen Seite ist damit wirksam verhindert. Besonders vorteilhaft sind diesbezüglich die vorgenannten Silikondichtungen.

Eine weitere vorteilhafte Weiterbildung des erfindungsgemäßen Gargeschirrs sieht vor, dass sich das Isolierteil über mindestens 50% der Höhe des Griffkörpers, bevorzugt über mindestens 90%, besonders bevorzugt über mindestens 110%, der Höhe des Griffanschlussteils, erstreckt. Auf diese Weise ist eine ungewünschte Wärmeübertragung von dem Garbehälter oder dem Deckel auf den Griffkörpers des Griffs wirksam verhindert, zumindest jedoch auf ein akzeptables Maß reduziert. Dies gilt besonders für die bevorzugte Ausführungsform und insbesondere für die besonders bevorzugte Ausführungsform dieser Weiterbildung.

Eine vorteilhafte Weiterbildung der vorgenannten Weiterbildung des erfindungsgemäßen Gargeschirrs sieht vor, dass sich das Isolierteil über mindestens 50% der Höhe des Garbehälters erstreckt. Hierdurch ergibt sich zum einen eine gute Kraftübertragungsverbindung zwischen dem Garbehälter beziehungsweise dem Deckel auf der einen Seite und dem Griffkörper des mindestens einen Griffs auf der anderen Seite. Dies ist insbesondere bei schweren undloder großvolumigen Gargeschirren von Vorteil. Zum anderen ist damit auch eine große sichtbare Oberfläche des Isolierteils verbunden, so dass die für den Benutzer des Gargeschirrs optisch wahrnehmbare Ausgabe entsprechend größer ausgebildet ist. Ferner kann die großflächige Anlage des Griffs, nämlich des Griffanschlussteils, mittels des Isolierteils an dem Garbehälter oder dem Deckel auch für die ästhetische Gestaltung des Gargeschirrs verwendet werden. Beispielsweise, indem das Isolierteil in einem Betriebszustand des Isolierteils, in dem keine Informationen an den Benutzer des Gargeschirrs übermittelt werden müssen, mittels der mindestens einen Lichtquelle in einer optisch gefälligen Lichtfarbe leuchtet.

Eine andere vorteilhafte Weiterbildung des erfindungsgemäßen Gargeschirrs sieht vor, dass das Isolierteil derart zwischen dem Garbehälter und dem Griffanschlussteil angeordnet ist beziehungsweise derart zwischen dem Deckel und dem Griffanschlussteil angeordnet ist, dass die von außen sichtbare Oberfläche des Isolierteils mit der Lichtauskoppelstelle entlang des gesamten Umfangs des Griffanschlussteils ausgebildet ist. Auf diese Weise ist die Sichtbarkeit der mittels des Isolierteils ausgegebenen Information im Wesentlichen von allen Seiten des Gargeschirrs ermöglicht. Entsprechend ist eine verlässliche Information des Benutzers des Gargeschirrs im Wesentlichen unabhängig von der relativen Positionierung des Benutzers zu dem Gargeschirr gewährleistet.

Eine weitere vorteilhafte Weiterbildung des erfindungsgemäßen Gargeschirrs sieht vor, dass eine Oberseite des Griffkörpers mittels einer Abdeckung des Griffs abgedeckt ist. Hierdurch ist ein optisch gefälliges Erscheinungsbild des Griffkörpers selbst und damit des Gargeschirrs als Ganzem auf konstruktiv einfache Art und Weise ermöglicht. Die Abdeckung kann dabei beispielsweise aus Metall, Glas, Kunststoff oder einem Verbundmaterial ausgebildet sein. Ferner kann das Material der Abdeckung als ein transparentes, bevorzugt ein transluzentes, Material ausgebildet sein.

Eine besonders vorteilhafte Weiterbildung des erfindungsgemäßen Gargeschirrs sieht vor, dass sich ein Abschnitt des Isolierteils mit einem Teil der von außen sichtbaren Oberfläche des Isolierteils mit der Lichtauskoppelstelle ausgehend von dem Griffanschlussteil weiter in Richtung Griffkörper erstreckt, bevorzugt, dass der vorgenannte Abschnitt auf der Oberseite des Griffkörpers angeordnet ist, besonders bevorzugt, dass dieser Abschnitt mittels der Abdeckung des Griffs abgedeckt ist, wobei die Abdeckung zu diesem Abschnitt korrespondierend transluzent ausgebildet ist. Auf diese Weise ist die Sichtbarkeit der an den Benutzer mittels des Isolierteils ausgegebenen Information weiter verbessert. Dies gilt besonders für die bevorzugte und insbesondere für die besonders bevorzugte Ausführungsform dieser Weiterbildung, da die Oberseite des Griffkörpers eine Stelle des Gargeschirrs darstellt, die bei der Bedienung des Gargeschirrs besonders im Fokus, nämlich im Blickfeld des Benutzers, ist. Darüber hinaus ermöglicht die besonders bevorzugte Ausführungsform dieser Weiterbildung eine in jedem Betriebszustand des Gargeschirrs optisch gefällige Ausbildung des Griffkörpers. Entsprechend ist das Design des Gargeschirrs in diesem Aspekt in weiten geeigneten Grenzen frei wählbar.

Eine andere besonders vorteilhafte Weiterbildung des erfindungsgemäßen Gargeschirrs sieht vor, dass die mindestens eine Lichtquelle mittels der Steuerung in Abhängigkeit eines Betriebszustands des Gargeschirrs und/oder eines Kochfelds, auf dem das Gargeschirr aufgestellt ist, undloder in Abhängigkeit einer Zuordnung undloder Nichtzuordnung des Gargeschirrs zu einer Kochstelle des Kochfelds und/oder in Abhängigkeit eines Temperaturzustands des Gargeschirrs undloder in Abhängigkeit eines Fehlerzustands des Gargeschirrs und/oder des Kochfelds ansteuerbar ist. Hierdurch ist es möglich, den Benutzer des Gargeschirrs und damit den Benutzer des Kochfelds, auf dem das Gargeschirr aufgestellt ist, über zentrale und damit besonders wichtige Parameter bei dem Betrieb des Gargeschirrs undloder des Kochfelds auf intuitive Art und Weise zu informieren. Bei dem Betriebszustands des Gargeschirrs undloder eines Kochfelds kann es sich beispielsweise um einen Einschaltzustand des Gargeschirrs und/oder des Kochfelds handeln. Denkbar ist auch die Anzeige der Kochstufe einer Kochstelle des Kochfelds, auf der das erfindungsgemäße Gargeschirr aufgestellt ist. Eine Zuordnung und/oder Nichtzuordnung des Gargeschirrs zu einer Kochstelle des Kochfelds kann beispielsweise durch ein in blauer Farbe leuchtendes Isolierteil für den Benutzer des Gargeschirrs kenntlich gemacht werden. Je nachdem, ob das Isolierteil in der vorgenannten Farbe für einen vorher festgelegten Zeitraum blinkt oder dauerhaft leuchtet, kann dabei mittels des Isolierteils auf eine Zuordnung oder eben eine Nichtzuordnung des Gargeschirrs zu der Kochstelle hingewiesen werden. Ein Temperaturzustand des Gargeschirrs kann beispielsweise mittels eines in roter Farbe leuchtenden Isolierteils für den Benutzer des Gargeschirrs angezeigt werden. Dabei kann das Isolierteil beispielsweise über eine Restwärme des Gargeschirrs informieren. Je nach Stärke der roten Farbe undloder einer Blinkgeschwindigkeit der roten Farbe kann der Benutzer über eine mehr oder weniger hohe Temperatur des Gargeschirrs informiert werden. Ein Fehlerzustand des Gargeschirrs undloder des Kochfelds kann ebenfalls mittels des Isolierteils an den Benutzer des Gargeschirrs optisch ausgegeben werden. Beispielsweise könnte ein für einen ordnungsgemäßen Betrieb der mindestens einen Lichtquelle der Ausgabeeinheit des Gargeschirrs zu niedriger Ladezustand der Energiequelle durch ein in gelber Farbe leuchtendes Isolierteil an den Benutzer des Gargeschirrs gemeldet werden. Wie oben bereits beispielhaft erläutert, kann neben der Farbe, in der das Isolierteil leuchtet, auch eine Frequenz der Emission der Farbe, also blinken, pulsieren, dauerhaftes Leuchten, und/oder ein Farbwechsel dazu dienen, um den Benutzer des Gargeschirrs über voneinander verschiedene Parameter bei dem Betrieb des Gargeschirrs auf intuitive Art und Weise zu informieren.

Drei Ausführungsbeispiele der Erfindung sind in den Zeichnungen rein schematisch dargestellt und werden nachfolgend näher beschrieben. Es zeigt
- Figur 1: ein erstes Ausführungsbeispiel des erfindungsgemäßen Gargeschirrs in einer Draufsicht, ohne Abdeckung;
- Figur 2: das erste Ausführungsbeispiel in einer seitlichen Schnittdarstellung;
- Figur 3: das erste Ausführungsbeispiel gemäß der Fig. 2, in einer vergrößerten Detailansicht im Bereich des Isolierteils;
- Figur 4: das erste Ausführungsbeispiel in einer teilweisen, perspektivischen Explosionsdarstellung;
- Figur 5: das erste Ausführungsbeispiel gemäß der Fig. 1, mit Abdeckung;
- Figur 6a-c: das erste Ausführungsbeispiel in drei Varianten, jeweils in einer Seitenansicht;
- Figur 7: ein zweites Ausführungsbeispiel des erfindungsgemäßen Gargeschirrs in einer Draufsicht, ohne Abdeckung;
- Figur 8: das zweite Ausführungsbeispiel gemäß der Fig. 7, mit Abdeckung und
- Figur 9a-c: das zweite Ausführungsbeispiel in drei Varianten, jeweils in einer Seitenansicht;
- Figur 10: ein drittes Ausführungsbeispiel des erfindungsgemäßen Gargeschirrs in einer Schnittdarstellung mit einem Deckel.

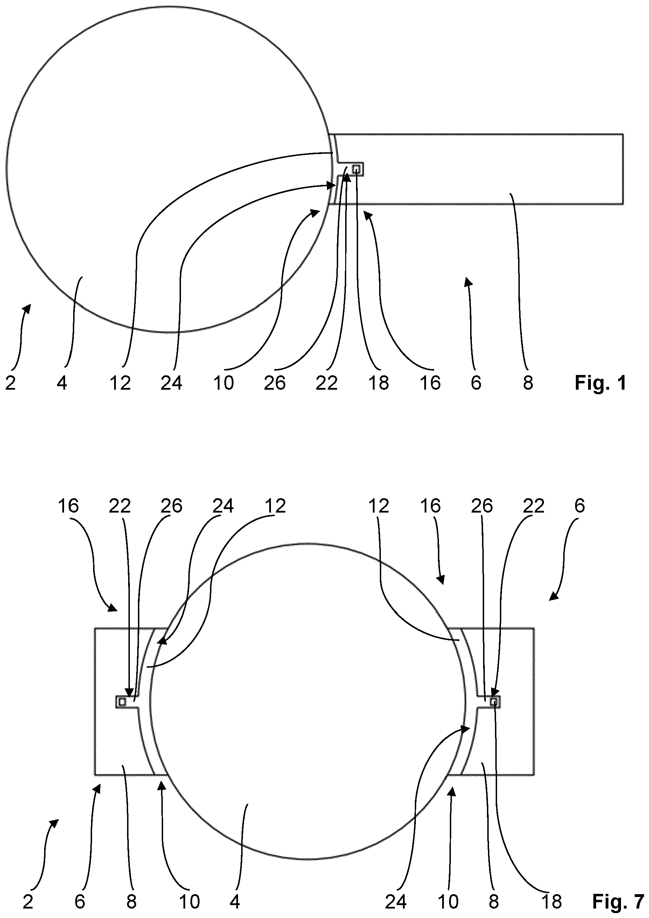

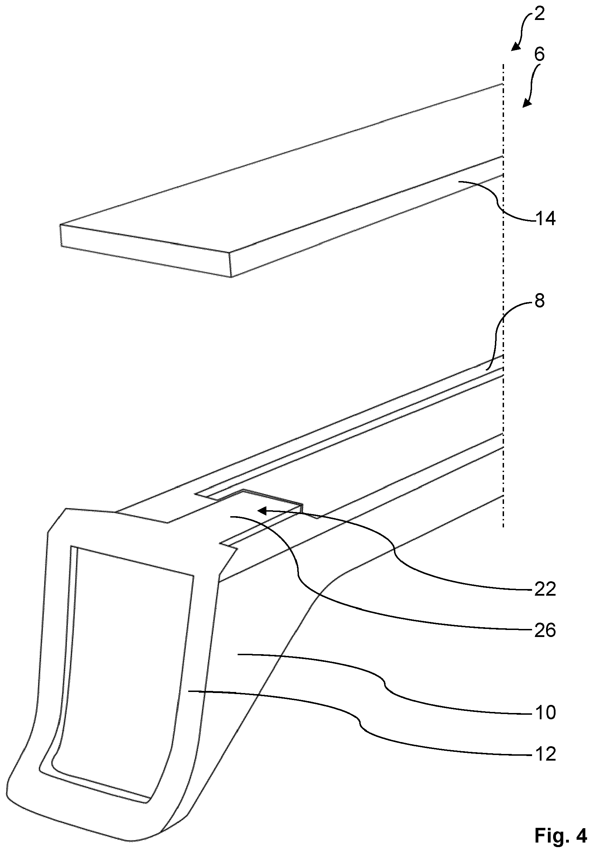

In den Fig. 1 bis 6c ist ein erstes Ausführungsbeispiel des erfindungsgemäßen Gargeschirrs rein exemplarisch dargestellt.

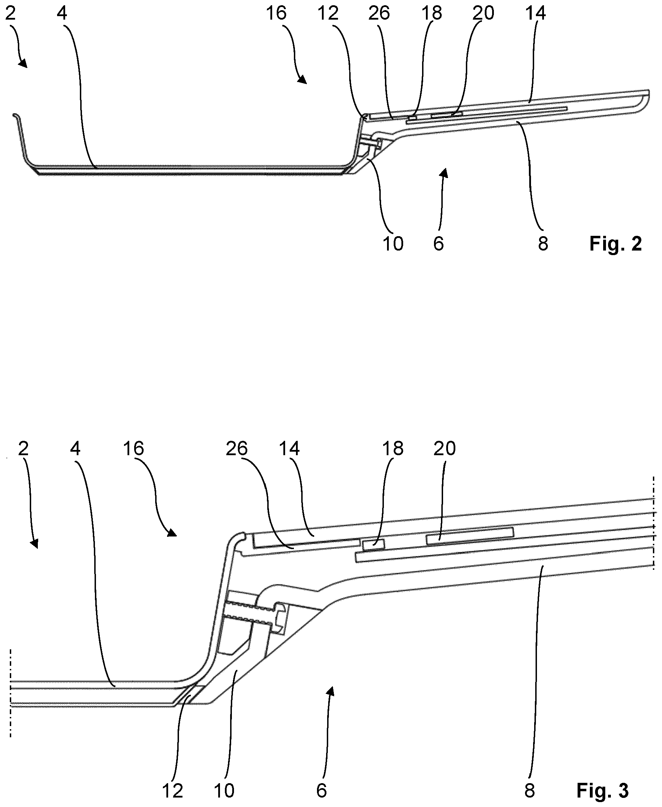

Das Gargeschirr 2 ist als eine Pfanne ausgebildet und umfasst einen Garbehälter 4 zur Aufnahme eines nicht dargestellten Garguts, einen Griff 6 zur Handhabung des Gargeschirrs 2, wobei ein Griffkörper 8 des Griffs 6 mittels eines Griffanschlussteils 10 des Griffs 6 mit dem Garbehälter 4 kraftübertragend verbunden ist, und wobei zwischen dem Griffanschlussteil 10 und dem Garbehälter 4 ein Isolierteil 12 des Gargeschirrs 2 zur Reduzierung der Wärmeübertragung von dem Garbehälter 4 auf den Griffkörper 8 angeordnet ist. Das Griffanschlussteil 10 ist bei dem vorliegenden Ausführungsbeispiel als ein integraler Bestandteil des Griffkörpers 8 ausgebildet. Eine Oberseite des Griffkörpers 8 ist mittels einer Abdeckung 14 abgedeckt; siehe hierzu die Fig. 2 bis 4. Das Gargeschirr 2 ist darüber hinaus zur Verwendung auf einem als Induktionskochfeld ausgebildeten Kochfeld geeignet ausgebildet. Das eine Mehrzahl von Kochstellen aufweisende Kochfeld ist nicht dargestellt.

In dem Griffkörper 8 ist eine Ausgabeeinheit 16 zur optischen Ausgabe von Informationen an einen nicht dargestellten Benutzer des Gargeschirrs 2 teilweise integriert, wobei die Ausgabeeinheit 16 eine als Mehrfarben-LED ausgebildete Lichtquelle 18 aufweist, und wobei die Lichtquelle 18 mittels einer Steuerung 20 des Gargeschirrs 2 ansteuerbar und mittels einer in der Steuerung 20 integrierten Energiequelle des Gargeschirrs 2 mit elektrischer Energie versorgbar ist.

Das Isolierteil 12 ist als ein Lichtleiter mit einer Lichteinkoppelstelle 22 zur Einkopplung von mittels der Lichtquelle 18 emittierten Licht in das Isolierteil 12 und einer Mehrzahl von Lichtauskoppelstellen 24 zur Auskopplung dieses Lichts aus dem Isolierteil 12 ausgebildet, wobei die Lichteinkoppelstelle 22 an dem Griffkörper 8 und die Lichtauskoppelstellen 24 an einer von außen sichtbaren Oberfläche des Isolierteils 12 angeordnet sind.

Bei dem vorliegenden Ausführungsbeispiel ist das Isolierteil 12 transluzent ausgebildet, so dass mittels der Lichtquelle 18 emittiertes und mittels der Lichteinkoppelstelle 22 in das Isolierteil 12 eingekoppeltes Licht mittels der Lichtauskoppelstellen 24 aus dem Isolierteil 12 auskoppelbar ist. Gleichzeitig ist das Isolierteil 12, wenn mittels der Lichtquelle 18 kein Licht emittiert wird, für den Benutzer des Gargeschirrs 2 im Wesentlichen nicht durchsichtig, also blickdicht. Ferner ist das Isolierteil 12 hier als eine Dichtung, nämlich als eine Silikondichtung, ausgebildet.

In den Fig. 2 bis 4 ist der Aufbau des Gargeschirrs gemäß dem ersten Ausführungsbeispiel näher dargestellt. Wie aus einer Zusammenschau der Fig. 1 bis 4 deutlich hervorgeht, ist das Isolierteil 12 derart zwischen dem Garbehälter 4 und dem Griffanschlussteil 10 angeordnet, dass die von außen sichtbare Oberfläche des Isolierteils 12 mit den Lichtauskoppelstellen 24 entlang des gesamten Umfangs des Griffanschlussteils 10 ausgebildet ist. Wie ferner aus den Fig. 1 bis 4 ersichtlich ist, erstreckt sich ein Abschnitt 26 des Isolierteils 12 ausgehend von dem Griffanschlussteil 10 weiter in Richtung Griffkörper 8, wobei der vorgenannte Abschnitt 26 auf der Oberseite des Griffkörpers 8 angeordnet und mittels der Abdeckung 14 des Griffs 6 abgedeckt ist. In einer alternativen Ausrührungsform des erfindungsgemäßen Gargeschirrs wäre es im Unterschied dazu denkbar, dass sich ein Abschnitt des Isolierteils mit einem Teil der von außen sichtbaren Oberfläche des Isolierteils mit der mindestens einen Lichtauskoppelstelle ausgehend von dem Griffanschlussteil weiter in Richtung Griffkörper erstreckt, bevorzugt, dass der vorgenannte Abschnitt auf der Oberseite des Griffkörpers angeordnet ist, besonders bevorzugt, dass dieser Abschnitt mittels der Abdeckung des Griffs abgedeckt ist, wobei die Abdeckung zu diesem Abschnitt korrespondierend transluzent ausgebildet ist. Dies ist bei dem vorliegenden ersten Ausführungsbeispiel jedoch nicht der Fall.

Die Lichtquelle 18 ist bei dem vorliegenden Ausführungsbeispiel mittels der Steuerung 20 in Abhängigkeit eines Betriebszustands des Gargeschirrs 2 und des Kochfelds, auf dem das Gargeschirr 2 aufgestellt ist, und in Abhängigkeit einer Zuordnung und Nichtzuordnung des Gargeschirrs 2 zu einer Kochstelle des Kochfelds und in Abhängigkeit eines Temperaturzustands des Gargeschirrs 2 und in Abhängigkeit eines Fehlerzustands des Gargeschirrs 2 und des Kochfelds ansteuerbar. Dies wird nachfolgend noch näher erläutert.

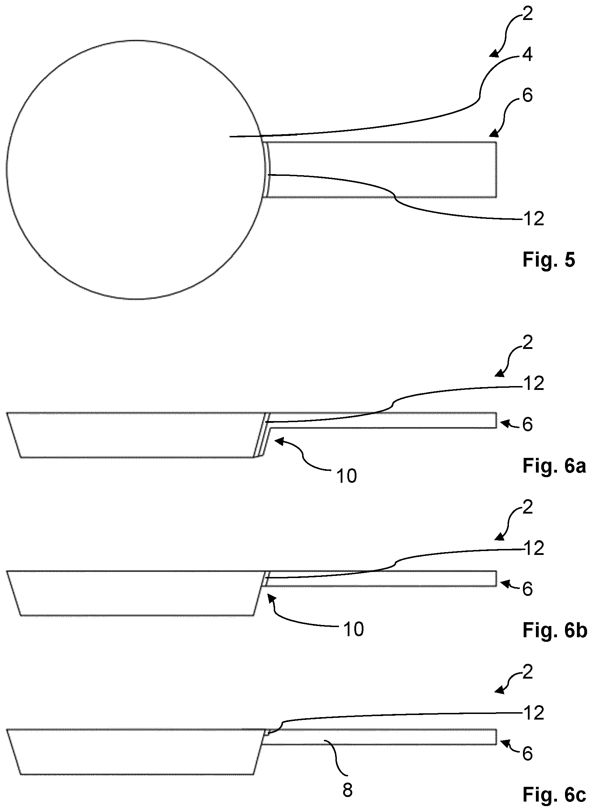

In den Fig 5 bis 6c sind insgesamt drei bauliche Varianten des ersten Ausführungsbeispiels rein exemplarisch dargestellt. Die drei Varianten unterscheiden sich hier lediglich in konstruktiver Hinsicht und sind ansonsten, beispielsweise schaltungstechnisch und bezüglich der Ansteuerung der Lichtquelle 18 mittels der Steuerung 20, gleich ausgebildet. Gemäß der in der Fig. 1 bis 5 und 6a dargestellten ersten Variante erstreckt sich das Isolierteil 12 über etwa 110% der Höhe des Griffanschlussteils 10. Bei dieser ersten Variante erstreckt sich das Isolierteil 12 darüber hinaus über die gesamte Höhe des Garbehälters 4.

Im Unterschied dazu erstreckt sich das Isolierteil 12 in der zweiten Variante gemäß der Fig. 6b über 100%, der Höhe des Griffanschlussteils 10 und in der dritten Variante gemäß der Fig. 6c über 50% der Höhe des Griffkörpers 8.

Nachfolgend werden die Funktionsweise des erfindungsgemäßen Gargeschirrs und das erfindungsgemäße Verfahren gemäß dem ersten Ausführungsbeispiel anhand der Fig. 1 bis 6c kurz erläutert.

Der nicht dargestellte Benutzer stellt das Gargeschirr 2 auf dem Fachmann bekannte Weise auf eine der Kochstellen des ebenfalls nicht dargestellten Kochfelds auf. Wie oben bereits erläutert, ist es bei dem vorliegenden Ausführungsbeispiel vorgesehen, dass die eine Lichtquelle 18 mittels der Steuerung 20 in Abhängigkeit eines Betriebszustands des Gargeschirrs 2 und des Kochfelds, auf dem das Gargeschirr 2 aufgestellt ist, und in Abhängigkeit einer Zuordnung und Nichtzuordnung des Gargeschirrs 2 zu der Kochstelle des Kochfelds, auf die das Gargeschirr 2 von dem Benutzer aufgestellt worden ist, und in Abhängigkeit eines Temperaturzustands des Gargeschirrs 2 und in Abhängigkeit eines Fehlerzustands des Gargeschirrs 2 und des Kochfelds ansteuerbar ist. Hierdurch ist es möglich, den Benutzer des Gargeschirrs 2 und damit den Benutzer des Kochfelds, auf dem das Gargeschirr 2 aufgestellt ist, über zentrale und damit besonders wichtige Parameter bei dem Betrieb des Gargeschirrs 2 und des Kochfelds auf intuitive Art und Weise zu informieren.

Bei dem Betriebszustands des Gargeschirrs 2 und des Kochfelds handelt es sich beispielsweise um einen Einschaltzustand des Gargeschirrs 2 und des Kochfelds. Denkbar ist darüber hinaus auch die Anzeige der von dem Benutzer eingestellten Kochstufe der Kochstelle des Kochfelds, auf der das erfindungsgemäße Gargeschirr 2 aufgestellt ist. Eine Zuordnung und Nichtzuordnung des Gargeschirrs 2 zu der Kochstelle des Kochfelds, auf der das Gargeschirr 2 von dem Benutzer aufgestellt worden ist, wird bei dem vorliegenden Ausführungsbeispiel durch das in blauer Farbe leuchtende Isolierteil 12 für den Benutzer des Gargeschirrs 2 kenntlich gemacht. Je nachdem, ob das Isolierteil 12 in der vorgenannten Farbe für einen vorher festgelegten Zeitraum blinkt oder dauerhaft leuchtet, wird der Benutzer mittels des Isolierteils 12 auf eine Zuordnung oder eben eine Nichtzuordnung des Gargeschirrs 2 zu der vorgenannten Kochstelle hingewiesen. Ein Temperaturzustand des Gargeschirrs 2 wird beispielsweise mittels des in roter Farbe leuchtenden Isolierteils 12 für den Benutzer des Gargeschirrs 2 angezeigt. Dabei informiert das Isolierteil 12 den Benutzer beispielsweise über eine Restwärme des Gargeschirrs 2. Je nach Stärke der roten Farbe undloder einer Blinkgeschwindigkeit der roten Farbe wird der Benutzer über eine mehr oder weniger hohe Temperatur des Gargeschirrs informiert.

Ein Fehlerzustand des Gargeschirrs 2 und des Kochfelds wird bei dem vorliegenden Ausführungsbeispiel ebenfalls mittels des Isolierteils 12 an den Benutzer des Gargeschirrs 2 optisch ausgegeben. Beispielsweise wird ein für einen ordnungsgemäßen Betrieb der Lichtquelle 18 der Ausgabeeinheit 16 des Gargeschirrs 2 zu niedriger Ladezustand der in der Steuerung 20 integrierten Energiequelle durch das in gelber Farbe leuchtende Isolierteil 12 an den Benutzer des Gargeschirrs 2 gemeldet. Wie oben bereits beispielhaft erläutert, kann neben der Farbe, in der das Isolierteil 12 leuchtet, auch eine Frequenz der Emission der Farbe, also blinken, pulsieren, dauerhaftes Leuchten, undloder ein Farbwechsel dazu dienen, um den Benutzer des Gargeschirrs 2 über voneinander verschiedene Parameter, beispielsweise die oben genannten Parameter, bei dem Betrieb des Gargeschirrs 2 auf intuitive Art und Weise zu informieren.

In den Fig. 7 bis 9c ist ein zweites Ausführungsbeispiel des erfindungsgemäßen Gargeschirrs rein exemplarisch dargestellt, wobei das zweite Ausführungsbeispiel baulich, schaltungstechnisch und steuerungstechnisch im Wesentlichen mit dem ersten Ausführungsbeispiel übereinstimmt. Entsprechend kann hier weitgehend auf die Ausführungen zu dem ersten Ausführungsbeispiel verwiesen werden. Gleiche oder gleichwirkende Bauteile sind mit den gleichen Bezugszeichen bezeichnet.

Im Unterschied zu dem ersten Ausführungsbeispiel ist das Gargeschirr 2 des zweiten Ausführungsbeispiels als ein Kochtopf ausgebildet. Entsprechend weist das Gargeschirr 2 bei dem zweiten Ausführungsbeispiel anstelle von einem Griff zwei Griffe 6 auf. Siehe hierzu die Fig. 7 bis 9c.

Ansonsten ist das zweite Ausführungsbeispiel des erfindungsgemäßen Gargeschirrs analog zu dem ersten Ausführungsbeispiel aufgebaut. Gleiches gilt für dessen Funktionsweise.

Auch das zweite Ausführungsbeispiel des erfindungsgemäßen Gargeschirrs ist in den Fig. 7 bis 9c in insgesamt drei Varianten exemplarisch gezeigt, wobei die drei Varianten des zweiten Ausführungsbeispiels denen des ersten Ausführungsbeispiels, unter Beachtung der oben genannten baulichen Unterschiede, entsprechen.

Analog zu dem ersten Ausführungsbeispiel unterscheiden sich die drei Varianten des zweiten Ausführungsbeispiels voneinander ebenfalls lediglich in konstruktiver Hinsicht und sind ansonsten, beispielsweise schaltungstechnisch und bezüglich der Ansteuerung der Lichtquelle 18 mittels der Steuerung 20, gleich ausgebildet. Gemäß der in der Fig. 7 bis 9a dargestellten ersten Variante des zweiten Ausführungsbeispiels erstreckt sich das

Isolierteil 12 über etwa 110% der Höhe des Griffanschlussteils 10. Bei dieser ersten Variante erstreckt sich das Isolierteil 12 darüber hinaus über die gesamte Höhe des Garbehälters 4.

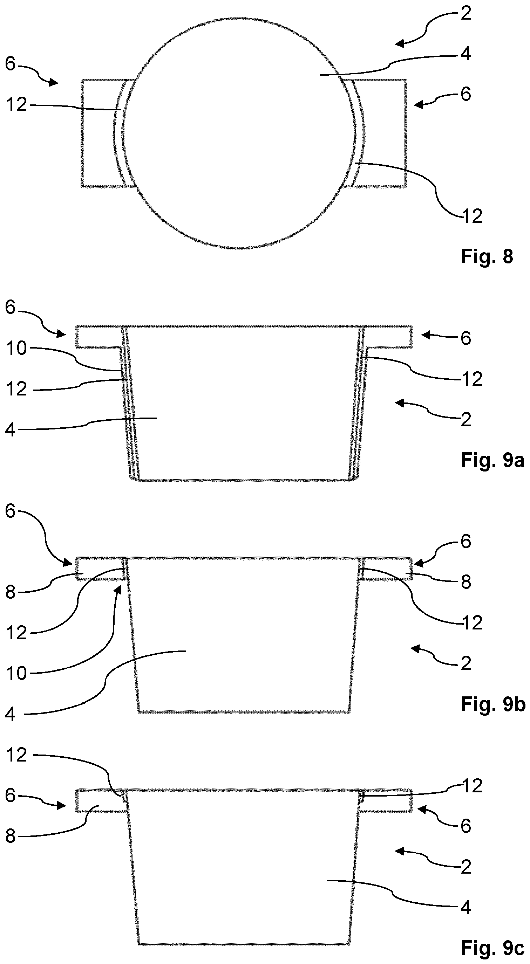

Im Unterschied dazu erstreckt sich das Isolierteil 12 in der zweiten Variante gemäß der Fig. 9b über 100%, der Höhe des Griffanschlussteils 10, wobei dies bei dem zweiten Ausführungsbeispiel 100% der Höhe des Griffkörpers 8 entspricht. In der dritten Variante gemäß der Fig. 9c erstreckt sich das Isolierteil lediglich über 50% der Höhe des Griffkörpers 8.

Wie oben bereits erläutert, entsprechen die Funktionsweise des erfindungsgemäßen Gargeschirrs und das erfindungsgemäße Verfahren gemäß dem zweiten Ausführungsbeispiel, unter Beachtung der oben genannten baulichen Unterschiede, denen des ersten Ausführungsbeispiels, so dass diesbezüglich auf die obigen Ausführungen zu dem ersten Ausführungsbeispiel verwiesen wird.

Die Erfindung ist nicht auf die erläuterten Ausführungsbeispiele begrenzt. Das Gargeschirr ist nach Art, Funktionsweise, Dimensionierung, Form und Material in weiten geeigneten Grenzen frei wählbar. Bei dem erfindungsgemäßen Gargeschirr kann es sich beispielsweise auch um einen Bräter, einen Wasserkocher oder dergleichen handeln. Das erfindungsgemäße Gargeschirr kann dabei, wie bei den vorliegenden Ausführungsbeispielen, für ein als Induktionskochfeld ausgebildetes Kochfeld geeignet ausgebildet sein. Dies ist jedoch nicht zwingend erforderlich. Das Griffanschlussteil kann als ein mit dem Griffkörper verbundenes separates Teil oder als ein integraler Bestandteil des Griffkörpers ausgebildet sein. Das Isolierteil muss nicht zwingend gleichzeitig als eine Dichtung ausgebildet sein. Auch ist das Material des gleichzeitig als Dichtung ausgebildeten Isolierteils nicht auf Silikon beschränkt.

Die mindestens eine Lichtquelle kann, wie bei den vorliegenden Ausführungsbeispielen, als mindestens eine LED ausgebildet sein, wobei die mindestens eine Lichtquelle zur Abgabe von einfarbigen oder zur Abgabe von mehrfarbigem Licht geeignet ausgebildet sein kann. Die mindestens eine Lichtquelle ist jedoch in weiten geeigneten Grenzen frei wählbar; der Fachmann wird je nach den Erfordernissen des Einzelfalls die geeignete Auswahl vornehmen. Die mindestens eine Lichtquelle kann mittels der Steuerung derart ansteuerbar sein und angesteuert werden, dass das von dieser Lichtquelle emittierte Licht für einen vorher festgelegten Zeitraum blinkt, pulsiert undloder dauerhaft leuchtet. Wie bei den Ausführungsbeispielen kann es sich dabei um Licht voneinander verschiedener Farbe handeln. Dies ist jedoch nicht zwingend erforderlich. Die Lichtquelle kann auch lediglich als eine monochromes Licht emittierende Lichtquelle ausgebildet sein. Denkbar ist auch, dass eine Mehrzahl von monochromen Lichtquellen verwendet werden, wobei diese Lichtquellen dann derart mittels der Steuerung ansteuerbar sind, dass das Isolierteil in gewünschter Weise in Licht voneinander verschiedener Farbe leuchtet.

Um die Sichtbarkeit der an den Benutzer mittels des Isolierteils ausgegebenen Information weiter zu verbessern, kann es vorgesehen sein, dass sich ein Abschnitt des Isolierteils mit einem Teil der von außen sichtbaren Oberfläche des Isolierteils mit der mindestens einen Lichtauskoppelstelle ausgehend von dem Griffanschlussteil weiter in Richtung Griffkörper erstreckt, bevorzugt, dass der vorgenannte Abschnitt auf der Oberseite des Griffkörpers angeordnet ist, besonders bevorzugt, dass dieser Abschnitt mittels der Abdeckung des Griffs abgedeckt ist, wobei die Abdeckung zu diesem Abschnitt korrespondierend transluzent ausgebildet ist. Dies gilt besonders für die bevorzugte und insbesondere für die besonders bevorzugte Ausführungsform dieser Weiterbildung, da die Oberseite des Griffkörpers eine Stelle des Gargeschirrs darstellt, die bei der Bedienung des Gargeschirrs besonders im Fokus, nämlich im Blickfeld des Benutzers, ist. Darüber hinaus ermöglicht die besonders bevorzugte Ausführungsform dieser Weiterbildung eine in jedem Betriebszustand des Gargeschirrs optisch gefällige Ausbildung des Griffkörpers. Entsprechend ist das Design des Gargeschirrs in diesem Aspekt in weiten geeigneten Grenzen frei wählbar.

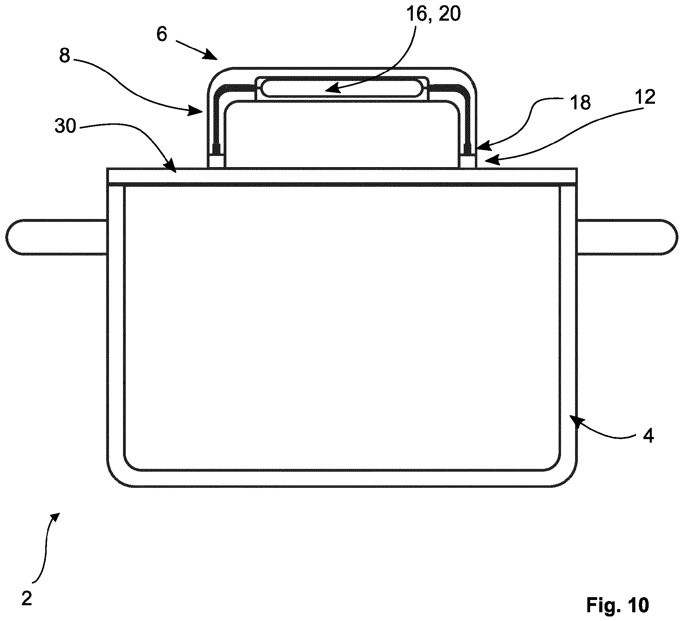

In der Figur 10 ein Deckel 30 eines Gargeschirrs 2 dargestellt. Der Deckel 30 dient dem Verschließen des Garbehälters 4. An dem Deckel 30 ist ein Griff 6 zur Handhabung des Gargeschirrs 2, insbesondere des Deckels 30 vorgesehen. Der Griff 6 weist einen Griffkörper 8 auf. Mittels eines hier nicht näher dargestellten Griffanschlussteils des Griffs 6 ist der Griffkörper 8 mit dem Deckel 30 kraftübertragend verbunden. Zwischen dem Griffanschlussteil und dem Deckel 30 ist ein Isolierteil 12 des Gargeschirrs 2 zur Reduzierung der Wärmeübertragung von dem Deckel 30 auf den Griffkörper 8 angeordnet. In dem Griffkörper 8 ist eine Ausgabeeinheit 16 zur optischen Ausgabe von Informationen an einen nicht dargestellten Benutzer des Gargeschirrs 2 teilweise integriert, wobei die Ausgabeeinheit 16 exemplarisch eine als Mehrfarben-LED ausgebildete Lichtquelle 18 aufweist, und wobei die Lichtquelle 18 mittels einer Steuerung 20 des Gargeschirrs 2 ansteuerbar und mittels einer in der Steuerung 20 integrierten Energiequelle des Gargeschirrs 2 mit elektrischer Energie versorgbar ist.

## Patentansprüche

1. Gargeschirr (2), umfassend
einen Garbehälter (4) zur Aufnahme eines Garguts undloder einen Deckel (30) zum verschließen des Garbehälters (4),
mindestens einen Griff (6) zur Handhabung des Gargeschirrs (2),
wobei ein Griffkörper (8) des Griffs (6) mittels eines Griffanschlussteils (10) des Griffs (6) mit dem Garbehälter (4) undloder dem Deckel (30) des Gargeschirrs (2) kraftübertragend verbunden ist,
und wobei zwischen dem Griffanschlussteil (10) und dem Garbehälter (4) und/oder dem Deckel (30) ein Isolierteil (12) des Gargeschirrs (2) zur Reduzierung der Wärmeübertragung auf den Griffkörper (8) angeordnet ist,
und mit einer zumindest teilweise in dem Griffkörper (8) integrierten Ausgabeeinheit (16) zur optischen Ausgabe von Informationen an einen Benutzer des Gargeschirrs (2),
wobei die Ausgabeeinheit (16) mindestens eine Lichtquelle (18) aufweist,
und wobei die Lichtquelle (18) mittels einer Steuerung (20) des Gargeschirrs (2) ansteuerbar und mittels einer Energiequelle des Gargeschirrs (2) mit elektrischer Energie versorgbar ist,
**dadurch gekennzeichnet, dass**
das Isolierteil (12) als ein Lichtleiter mit mindestens einer Lichteinkoppelstelle (22) zur Einkopplung von mittels der Lichtquelle (18) emittierten Licht in das Isolierteil (12) und mindestens einer Lichtauskoppelstelle (24) zur Auskopplung dieses Lichts aus dem Isolierteil (12) ausgebildet ist,
wobei die Lichteinkoppelstelle (22) an dem Griffkörper (8) und die Lichtauskoppelstelle (24) an einer von außen sichtbaren Oberfläche des Isolierteils (12) angeordnet ist.

2. Gargeschirr (2) nach Anspruch 1, wobei das Isolierteil (12) transluzent ausgebildet ist.

3. Gargeschirr (2) nach Anspruch 1 oder 2, wobei das Isolierteil (12) als eine Dichtung, bevorzugt als eine Silikondichtung, ausgebildet ist.

4. Gargeschirr (2) nach einem der Ansprüche 1 bis 3, wobei sich das Isolierteil (12) über mindestens 50% der Höhe des Griffkörpers (8), bevorzugt über mindestens 90%, besonders bevorzugt über mindestens 110%, der Höhe des Griffanschlussteils (10), erstreckt.

5. Gargeschirr (2) nach Anspruch 4, wobei sich das Isolierteil (12) über mindestens 50% der Höhe des Garbehälters (4) erstreckt.

6. Gargeschirr (2) nach einem der Ansprüche 1 bis 5, wobei das Isolierteil (12) derart zwischen dem Garbehälter (4) und dem Griffanschlussteil (10) undloder derart zwischen dem Deckel (30) und dem Griffanschlussteil (10) angeordnet ist, dass die von außen sichtbare Oberfläche des Isolierteils (12) mit der Lichtauskoppelstelle (24) entlang des gesamten Umfangs des Griffanschlussteils (10) ausgebildet ist.

7. Gargeschirr (2) nach einem der Ansprüche 1 bis 6, wobei eine Oberseite des Griffkörpers (8) mittels einer Abdeckung (14) des Griffs (6) abgedeckt ist.

8. Gargeschirr nach einem der Ansprüche 1 bis 7, wobei sich ein Abschnitt des Isolierteils (12) mit einem Teil der von außen sichtbaren Oberfläche des Isolierteils (12) mit der Lichtauskoppelstelle (24) ausgehend von dem Griffanschlussteil (10) weiter in Richtung Griffkörper (8) erstreckt, bevorzugt, dass der vorgenannte Abschnitt auf der Oberseite des Griffkörpers (8) angeordnet ist, besonders bevorzugt, dass dieser Abschnitt mittels der Abdeckung (14) des Griffs (6) abgedeckt ist, wobei die Abdeckung (14) zu diesem Abschnitt korrespondierend transluzent ausgebildet ist.

9. Gargeschirr (2) nach einem der Ansprüche 1 bis 8, wobei die mindestens eine Lichtquelle (18) mittels der Steuerung (20) in Abhängigkeit eines Betriebszustands des Gargeschirrs (2) undloder eines Kochfelds, auf dem das Gargeschirr (2) aufgestellt ist, und/oder in Abhängigkeit einer Zuordnung undloder Nichtzuordnung des Gargeschirrs (2) zu einer Kochstelle des Kochfelds undloder in Abhängigkeit eines Temperaturzustands des Gargeschirrs (2) undloder in Abhängigkeit eines Fehlerzustands des Gargeschirrs (2) undloder des Kochfelds ansteuerbar ist.

10. Verfahren zum Betrieb eines Gargeschirrs (2) nach einem der Ansprüche 1 bis 9, wobei die mindestens eine Lichtquelle (18) mittels der Steuerung (20) in Abhängigkeit eines Betriebszustands des Gargeschirrs (2) undloder eines Kochfelds, auf dem das Gargeschirr (2) aufgestellt ist, und/oder in Abhängigkeit einer Zuordnung undloder Nichtzuordnung des Gargeschirrs (2) zu einer Kochstelle des Kochfelds undloder in Abhängigkeit eines Temperaturzustands des Gargeschirrs (2) undloder in Abhängigkeit eines Fehlerzustands des Gargeschirrs (2) und/oder des Kochfelds angesteuert wird.

## Claims

1. Cookware item (2), comprising:
a cooking container (4) for holding food to be cooked and/or a lid (30) for closing the cooking container (4),
at least one handle (6) for handling the cookware item (2),
a handle body (8) of the handle (6) being force-transmittingly connected to the cooking container (4) and/or the lid (30) of the cookware item (2) by means of a handle connection part (10) of the handle (6),
and an insulating part (12) of the cookware item (2) being arranged between the handle connection part (10) and the cooking container (4) and/or the lid (30) in order to reduce the heat transfer to the handle body (8),
and having an output unit (16) at least partially integrated in the handle body (8) for optically outputting information to a user of the cookware item (2),
the output unit (16) having at least one light source (18),
and the light source (18) being able to be controlled by means of a control means (20) of the cookware item (2) and being able to be supplied with electrical energy by means of an energy source of the cookware item (2),
**characterised in that**
the insulating part (12) is designed as a light guide having at least one light in-coupling point (22) for coupling light emitted by means of the light source (18) into the insulating part (12) and at least one light out-coupling point (24) for coupling this light out of the insulating part (12),
the light in-coupling point (22) being arranged on the handle body (8) and the light out-coupling point (24) being arranged on an externally visible surface of the insulating part (12).

2. Cookware item (2) according to claim 1, wherein the insulating part (12) is translucent.

3. Cookware item (2) according to either claim 1 or claim 2, wherein the insulating part (12) is designed as a seal, preferably as a silicone seal.

4. Cookware item (2) according to any of claims 1 to 3, wherein the insulating part (12) extends over at least 50% of the height of the handle body (8), preferably over at least 90%, particularly preferably over at least 110%, of the height of the handle connection part (10).

5. Cookware item (2) according to claim 4, wherein the insulating part (12) extends over at least 50% of the height of the cooking container (4).

6. Cookware item (2) according to any of claims 1 to 5, wherein the insulating part (12) is arranged between the cooking container (4) and the handle connection part (10) and/or between the lid (30) and the handle connection part (10) such that the externally visible surface of the insulating part (12) with the light out-coupling point (24) is formed along the entire circumference of the handle connection part (10).

7. Cookware item (2) according to any of claims 1 to 6, wherein an upper side of the handle body (8) is covered by means of a cover (14) of the handle (6).

8. Cookware item according to any of claims 1 to 7, wherein a portion of the insulating part (12) with a part of the externally visible surface of the insulating part (12) with the light out-coupling point (24) extends from the handle connection part (10) further in the direction of the handle body (8), preferably such that the aforementioned portion is arranged on the upper side of the handle body (8), particularly preferably such that this portion is covered by means of the cover (14) of the handle (6), the cover (14) being designed to be translucent in correspondence with this portion.

9. Cookware item (2) according to any of claims 1 to 8, wherein the at least one light source (18) can be controlled by means of the control means (20) on the basis of an operating state of the cookware item (2) and/or a cooking hob on which the cookware item (2) is placed, and/or on the basis of an association and/or non-association of the cookware item (2) with a cooking zone of the cooking hob and/or on the basis of a temperature state of the cookware item (2) and/or on the basis of a fault state of the cookware item (2) and/or the cooking hob.

10. Method for operating a cookware item (2) according to any of claims 1 to 9, wherein the at least one light source (18) is controlled by means of the control means (20) on the basis of an operating state of the cookware item (2) and/or a cooking hob on which the cookware item (2) is placed, and/or on the basis of an association and/or non-association of the cookware item (2) with a cooking zone of the cooking hob and/or on the basis of a temperature state of the cookware item (2) and/or on the basis of a fault state of the cookware item (2) and/or the cooking hob.

## Revendications

1. Ustensile de cuisson (2), comprenant
un récipient de cuisson (4) destiné à recevoir un aliment à cuire et/ou un couvercle (30) permettant de fermer le récipient de cuisson (4),
au moins une poignée (6) permettant de manipuler l'ustensile de cuisson (2),
dans lequel un corps de poignée (8) de la poignée (6) est relié par transmission de force au récipient de cuisson (4) et/ou au couvercle (30) de l'ustensile de cuisson (2) à l'aide d'une partie de raccordement de poignée (10) de la poignée (6),
et dans lequel une partie isolante (12) de l'ustensile de cuisson (2) est disposée entre la partie de raccordement de poignée (10) et le récipient de cuisson (4) et/ou le couvercle (30) pour réduire la transmission de chaleur au corps de poignée (8),
et comportant une unité de sortie (16) intégrée au moins partiellement dans le corps de poignée (8) et permettant de délivrer en sortie de manière optique des informations à un utilisateur de l'ustensile de cuisson (2),
dans lequel l'unité de sortie (16) présente au moins une source de lumière (18),
et dans lequel la source de lumière (18) peut être commandée à l'aide d'une commande (20) de l'ustensile de cuisson (2) et peut être alimentée en énergie électrique à l'aide d'une source d'énergie de l'ustensile de cuisson (2),
**caractérisé en ce que**
la partie isolante (12) est conçue comme un guide de lumière comportant au moins un point de couplage de lumière (22) permettant le couplage, dans la partie isolante (12), d'une lumière émise à l'aide de la source de lumière (18) et au moins un point de découplage de lumière (24) permettant le découplage de cette lumière de la partie isolante (12),
dans lequel le point de couplage de lumière (22) est disposé sur le corps de poignée (8) et le point de découplage de lumière (24) est disposé sur une surface de la partie isolante (12), laquelle surface est visible de l'extérieur.

2. Ustensile de cuisson (2) selon la revendication 1, dans lequel la partie isolante (12) est conçue de manière translucide.

3. Ustensile de cuisson (2) selon la revendication 1 ou 2, dans lequel la partie isolante (12) est conçue sous la forme d'un joint, de préférence d'un joint en silicone.

4. Ustensile de cuisson (2) selon l'une des revendications 1 à 3, dans lequel la partie isolante (12) s'étend sur au moins 50 % de la hauteur du corps de poignée (8), de préférence sur au moins 90 %, de manière particulièrement préférée sur au moins 110 %, de la hauteur de la partie de raccordement de poignée (10).

5. Ustensile de cuisson (2) selon la revendication 4, dans lequel la partie isolante (12) s'étend sur au moins 50 % de la hauteur du récipient de cuisson (4).

6. Ustensile de cuisson (2) selon l'une des revendications 1 à 5, dans lequel la partie isolante (12) est disposée entre le récipient de cuisson (4) et la partie de raccordement de poignée (10) et/ou entre le couvercle (30) et la partie de raccordement de poignée (10) de telle sorte que la surface de la partie isolante (12), laquelle surface est visible de l'extérieur, est formée avec le point de découplage de lumière (24) le long de toute la circonférence de la partie de raccordement de poignée (10).

7. Ustensile de cuisson (2) selon l'une des revendications 1 à 6, dans lequel une face supérieure du corps de poignée (8) est recouverte à l'aide d'un élément de recouvrement (14) de la poignée (6).

8. Ustensile de cuisson selon l'une des revendications 1 à 7, dans lequel une section de la partie isolante (12) comportant une partie de la surface, visible de l'extérieur, de la partie isolante (12) comportant le point de découplage de lumière (24) s'étend plus loin en direction du corps de poignée (8) en partant de la partie de raccordement de poignée (10), de préférence en ce que la section précitée est disposée sur la face supérieure du corps de poignée (8), de manière particulièrement préférée en ce que cette section est recouverte à l'aide de l'élément de recouvrement (14) de la poignée (6), dans lequel l'élément de recouvrement (14) est conçu de manière translucide en correspondance avec cette section.

9. Ustensile de cuisson (2) selon l'une des revendications 1 à 8, dans lequel l'au moins une source de lumière (18) peut être commandée à l'aide de la commande (20) en fonction d'un état de fonctionnement de l'ustensile de cuisson (2) et/ou d'une plaque de cuisson sur laquelle l'ustensile de cuisson (2) est placé, et/ou en fonction d'une association et/ou d'une non-association de l'ustensile de cuisson (2) à une zone de cuisson de la plaque de cuisson et/ou en fonction d'un état de température de l'ustensile de cuisson (2) et/ou en fonction d'un état de défaut de l'ustensile de cuisson (2) et/ou de la plaque de cuisson.

10. Procédé permettant de faire fonctionner un ustensile de cuisson (2) selon l'une des revendications 1 à 9, dans lequel l'au moins une source de lumière (18) est commandée à l'aide de la commande (20) en fonction d'un état de fonctionnement de l'ustensile de cuisson (2) et/ou d'une plaque de cuisson sur laquelle l'ustensile de cuisson (2) est placé, et/ou en fonction d'une association et/ou d'une non-association de l'ustensile de cuisson (2) à une zone de cuisson de la plaque de cuisson et/ou en fonction d'un état de température de l'ustensile de cuisson (2) et/ou en fonction d'un état de défaut de l'ustensile de cuisson (2) et/ou de la plaque de cuisson.
